# EUROPEAN PATENT SPECIFICATION

(11) **EP 0 378 775 B1**
(45) Date of publication and mention of the grant of the patent: **05.04.1995**
(21) Application number: 89120988.4
(22) Date of filing: 13.11.1989
(51) Int. Cl.: H04M 1/72, H04M 1/274

(54) **Radiotelephone**
Funktelefon
Radiotéléphone

(30) Priority: 26.11.1988 GB 8827670
(43) Date of publication of application: 25.07.1990
(73) Proprietor: MOTOROLA A/S, 2300 Copenhagen S (DK)
(72) Inventor: Sogaard Rasmussen, Poul Erik, DK-2600 Glostrup (DK)
(74) Representative: Dunlop, Hugh Christopher

(56) References cited:
- DE-A- 3 702 509
- US-A- 4 680 787
- PATENT ABSTRACTS OF JAPAN vol. 10, no. 91 (E-394)(2148) April 9, 1986 & JP-A-60233 967
- ERICSSON REVIEW no. 3, 1987, pages 141 - 150; G. JISHALM N. RYDBECK:'Ericsson Telephones for Cellular Systems '

## Description

### Introduction

This invention relates to radios and particularly to radios of the kind having first memories for holding first information items and being arranged to receive second memories for holding second information items.

An example of such a radio is a radiotelephone in which a first memory holds telephone numbers which can be dialled by a user via abbreviated dialling techniques which are well known in the art. Such a radiotelephone may be arranged to receive a memory carrier, for example in the form of a magnetic card, providing a second memory holding telephone numbers which the user can dial in a similar abbreviated way to the numbers in the first memory (see, for example Japanese patent application J62020454A). Such a facility allows a user to dial abbreviatedly with any suitably equipped radiotelephone from a personally chosen list of telephone numbers stored in his or her own magnetic card or other memory carrier.

US-A-4680787 shows storing and recalling of digits in a radiotelephone and in an external keypad and display (a "converter"). A routine is described which can be entered through "STORE" and "RECALL" instructions. The operation of the routine requires the choosing by the user of a storage location which is either a location in a first memory in the radiotelephone or a location in a second memory in the converter.

JP-A-60233967 describes the copying of repertory dial numbers from one card to another card, using a fixed store as a temporary location pending the replacement of one card (the source card) with another card (the destination card).

It is an object of the present invention to provide a radio wherein the utility of the first and second memory facilities may be enhanced.

### Summary of the Invention

In accordance with the present invention there is provided a radiotelephone having means for coupling to a second memory, the radiotelephone comprising: a first memory for storing first abbreviated dial information items including telephone numbers; and memory receiving means for temporarily receiving the second memory for storing second abbreviated dial information items including telephone numbers. User selective memory access means are provided for accessing the first memory, selecting an abbreviated dial information item in the first memory and automatically dialling the telephone number included therein. User selective memory access means are provided for accessing the second memory, selecting an abbreviated dial information item in the second memory and automatically dialling the telephone number included therein, and user selective transfer means are provided for user selectively identifying an abbreviated dial information item in one of the memories and causing it to be transferred to the other of the memories for user selective access and automatic dialling from the other of the memories.

### Brief Description of Drawings

One radiotelphone in accordance with the invention will now be described, by way of example only, with reference to the accompanying drawings, in which:
Figure 1 shows a perspective view of the radiotelephone; and
Figure 2 shows a block schematic circuit diagram of part of the radiotelephone.

### Description of Preferred Embodiment

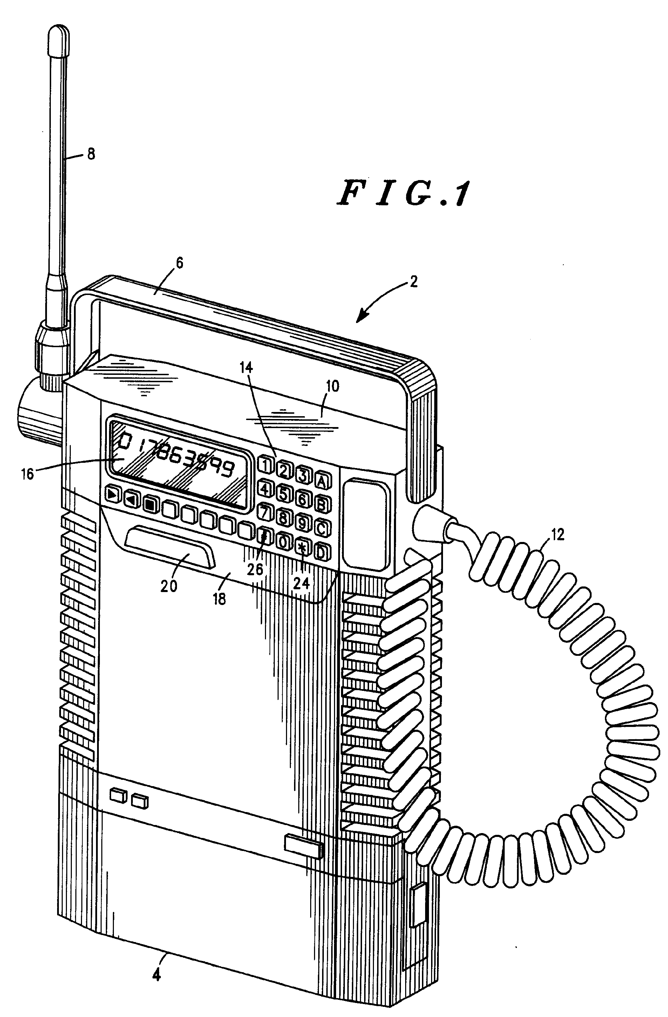

Referring firstly to Figure 1, a radiotelephone 2 has a system unit 4 with carrying handle 6 and antenna 8, and a handset 10 removably located in the system unit and connected thereto by a coiled cord 12. The handset 10 is provided with a group of twenty-four keys 14 and a visual display 16, as well as mouth- and ear-pieces (not shown).

The system unit 4 is also provided, adjacent the handset location, with a receiving slot 18 for a memory card 20. As shown, a fully inserted memory card 20 protrudes from the slot so as to facilitate later removal.

In use of the radiotelephone, a user can abbreviatedly dial any of up to one hundred stored telephone numbers by first pressing a pre-designated "abbreviated dial" key (e.g. key 24) on the handset 10 and then pressing two numeric keys (00 - 99) defining a memory location in which is stored the number to be dialled. Memor locations 00 - 39 are pre-defined as being "user" locations for holding numbers stored in the user's memory card 20, while the remaining codes 40 - 99 are pre-defined as being "system" locations for holding numbers stored in the system unit 4.

Telephone numbers for abbreviated dialling may be stored directly in the memory locations 00 - 39 of the memory card 20 or in the system unit memory locations 40 - 99 by the user (i) pressing a pre-designated "store" key (e.g. key 26), (ii) entering the desired telephone number by pressing the relevant numeric keys, (iii) pressing the "store" key again, then (iv) pressing two numeric keys (00 39 or 40 - 99) defining the memory location in which the number is to be stored.

As an alternative to the above method of storing telephone numbers for future abbreviated dialling by entering each digit of the number as necessary, the radiotelephone 2 is also provided with the facility to transfer stored numbers between the memory locations of the system unit 4 and the memory locations of the memory card 20. A stored number may be transferred between the two types of memory locations by the user (i) pressing the "store" key twice, (ii) pressing two numeric keys (00 - 39 or 40 - 99) defining the memory location from which the stored number is to be transferred, (iii) pressing the "store" key again, then (iv) pressing two numeric keys (40 - 99 or 00 - 39) defining the memory location into which the stored number is to be transferred. It will be appreciated that, alternatively to pressing the "store" key twice to initiate the transfer, if desired another of the keys 14 may be dedicated for use as a "transfer" key.

Associated with each memory location is storage capacity for alphabetic information relating to the telephone number stored therein. Thus the name can be stored of the person whose number is stored. The data in the memory locations 00-39 of the memory card is only accessible by individual selection of the corresponding short number, 00-39. The facility is provided to transfer all stored numbers and associated alphabetic information from the memory card to the system unit and the facility is provided to search, scan and recall the data alphabetically. In this manner all the memory locations 00-99 can be searched.

It will be readily appreciated that this transfer facility enhances the usablility of abbreviated dialling with the radiotelephone by obviating the need for numbers to be re-keyed in order to be stored, and so removing the risk of mis-keying. Instead numbers may be transferred or "swapped" with ease.

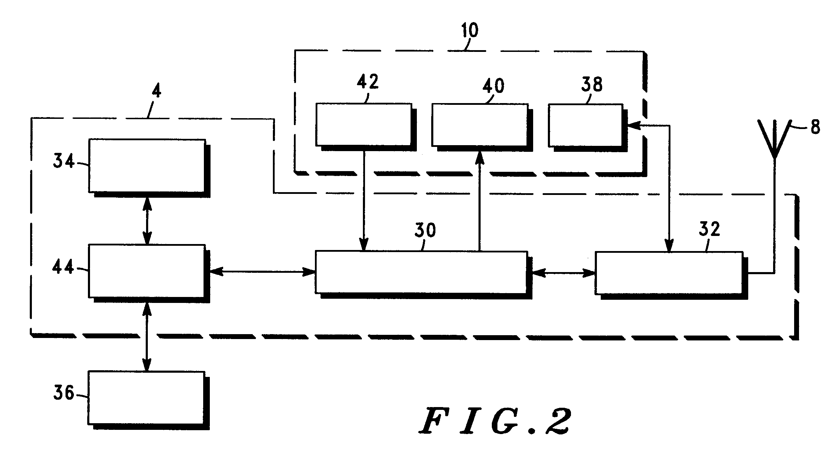

Referring now also to Figure 2, in block schematic form the radiotelephone 2 comprises in the system unit 4 a microprocessor 30, a radio transceiver 32 and a first set of memory locations 34. A removable set of second memory locations 36 may be provided (in the form of the memory card 20). An audio section 38, display section 40 and keypad section 42 are provided in the handset 10. Transfer means 44 are also provided in the system unit, under control of the microprocessor 30. In use of the radiotelephone 2 , the microprocessor 30 receives inputs from the keypad section 42 and from the first and/or second sets of memory locations and controls the transceiver 32, the display section 40 and the transfer means 44 to operate as described above.

It will be understood that memory card 20 may be in the form of a magnetic card or, preferably, in the form of a "smart" card, whereby for example call charging and other transaction processing may be performed within the card.

It will be appreciated that although in the above example there has been described the facility to transfer stored telephone numbers between first and second memories in a radiotelephone, the invention may be more broadly applied to the transfer of any stored information between first and second memories in any radio.

It will be appreciated that the invention has been described above by way of example only and that modifications to the above example may be made without departing from the inventive principle as defined in the claims.

## Claims

1. A radiotelephone having means (18) for coupling to a second memory (20, 36), the radiotelephone comprising:
a first memory (34) for storing first abbreviated dial information items including telephone numbers;
memory receiving means (18) for temporarily receiving the second memory (20, 36) for storing second abbreviated dial information items including telephone numbers;
user selective memory access means (42, 30, 44) for accessing the first memory (34), selecting an abbreviated dial information item in the first memory and automatically dialling the telephone number included therein,
user selective memory access means (42, 30, 44) for accessing the second memory (36), selecting an abbreviated dial information item in the second memory and automatically dialling the telephone number included therein, and
user selective transfer means (42, 30, 44) for user selectively identifying an abbreviated dial information item in one of the memories (34, 36) and causing it to be transferred to the other of the memories for user selective access and automatic dialling from the other of the memories.

2. A radiotelephone according to claim 1, wherein the memory receiving means is arranged to receive the second memory, comprising a smart card.

3. A radiotelephone according to claim 1, wherein transfer means (44) are provided for causing all telephone numbers and accompanying alphabetic information in the second memory to be transferred to the first memory.

4. A radiotelephone according to claim 1, 2 or 3, wherein means are provided (42, 30, 44) for carrying out searching operations on the basis of the alphabetic information on the information items in the first memory after such a transfer.

## Patentansprüche

1. Funktelefon, das eine Einrichtung (18) zum Anschluß an einen zweiten Speicher (20,36) aufweist, wobei das Funktelefon umfaßt:
einen ersten Speicher (34) zum Speichern erster Kurzwahlinformationen einschließlich Telefonnummern;
eine Speicheraufnahmeeinrichtung (18) zur vorübergehenden Aufnahme des zweiten Speichers (20,36) zum Speichern zweiter Kurzwahlinformationen einschließlich Telefonnummern;
eine vom Benutzer zu wählende Speicherzugriffseinrichtung (42,30,44), die dem Zugriff auf den ersten Speicher (34), der Auswahl einer Kurzwahlinformation im ersten Speicher und der automatischen Wahl der darin enthaltenen Telefonnummer dient,
eine vom Benutzer zu wählende Speicherzugriffseinrichtung (42,30,44), die dem Zugriff auf den zweiten Speicher (36), der Auswahl einer Kurzwahlinformation im zweiten Speicher und der automatischen Wahl der darin enthaltenen Telefonnummer dient,
eine vom Benutzer zu wählende Übertragungseinrichtung (42,30,44), die der vom Benutzer zu wählenden Kennzeichnung einer Kurzwahlinformation in einem der Speicher (34,36) und ihrer Übertragung in den anderen der Speicher zum Zweck des vom Benutzer zu wählenden Zugriffs und der automatischen Wahl aus dem anderen der Speicher dient.

2. Funktelefon nach Anspruch 1, wobei die Speicheraufnahmeeinrichtung den zweiten Speicher aufnimmt, der eine intelligente Karte (smart card) umfaßt.

3. Funktelefon nach Anspruch 1, wobei eine Übertragungseinrichtung (44) vorhanden ist, die bewirkt, daß alle Telefonnummern und zugehörige alphabetische Information im zweiten Speicher in den ersten Speicher übertragen werden.

4. Funktelefon nach Anspruch 1, 2 oder 3, wobei Einrichtungen (42, 30, 44) vorhanden sind, die Suchvorgänge auf der Grundlage der alphabetischen Information über die Informationen in dem ersten Speicher nach einer derartigen Übertragung ausführen.

## Revendications

1. Radiotéléphone possédant un moyen (18) destiné à assurer le couplage avec une deuxième mémoire (20,36), le radiotéléphone comprenant :
une première mémoire (34) destinée à mémoriser des premiers éléments d'informations de numérotation abrégée comportant des numéros de téléphone ;
un moyen (18) de réception de mémoire servant à recevoir temporairement la deuxième mémoire (20, 36) en vue de la mémorisation de deuxièmes éléments d'informations de numérotation abrégée comportant des numéros de téléphone ;
un moyen (42, 30, 44) d'accès en mémoire pouvant être sélectivement utilisé par un utilisateur, qui sert à faire accès à la première mémoire (34), à sélectionner un élément d'informations de numérotation abrégée dans la première mémoire et à composer automatiquement le numéro de téléphone qu'il contient,
un moyen (42, 30, 44) d'accès en mémoire pouvant être sélectivement utilisé par l'utilisateur, servant à faire accès à la deuxième mémoire (36), à sélectionner un élément d'informations de numérotation abrégée dans la deuxième mémoire et à composer automatiquement le numéro de téléphone qu'il contient, et
un moyen (42, 30, 44) de transfert pouvant être sélectivement utilisé par l'utilisateur, permettant à l'utilisateur d'identifier sélectivement un élément d'informations de numérotation abrégée dans l'une des mémoires (34, 36) et d'amener son transfert à l'autre des mémoires en vue d'un accès sélectif par l'utilisateur et d'une numérotation automatique depuis l'autre des mémoires.

2. Radiotéléphone selon la revendication 1, où le moyen de réception de mémoire est conçu pour recevoir la deuxième mémoire, comprenant une carte intelligente.

3. Radiotéléphone selon la revendication 1, où le moyen de transfert (44) est conçu de façon à amener le transfert dans la première mémoire de tous les numéros de téléphone, ainsi que des informations alphabétiques qui les accompagnent, se trouvant dans la deuxième mémoire.

4. Radiotéléphone selon la revendication 1, 2 ou 3, où des moyens sont prévus (42, 30, 44) pour mettre en oeuvre des opérations de recherche, en fonction des informations alphabétiques, sur les éléments d'informations contenus dans la première mémoire, après ce transfert.
